# EUROPEAN PATENT APPLICATION

(11) **EP 2 902 183 A1**
(43) Date of publication of application: **05.08.2015**
(21) Application number: 14000330.2
(22) Date of filing: 29.01.2014
(51) Int. Cl.: B31D 3/02, C04B 28/02, C04B 28/04, C09D 1/08, D21H 27/00, E04C 2/36, C04B 111/00, C04B 111/28

(54) **Cementitious coating for composite building materials and manufacture thereof**

(71) Applicant: ETH Zurich, 8092 Zurich (CH)
(72) Inventor: Fontana, Mario, 8212 Neuhausen am Rheinfall (CH); Flatt, Robert, 8706 Meilen (CH); Marchon, Delphine, 1630 Bulle (CH); Lex, Reiter, 8052 Zürich (CH)

(57) **Abstract**

The present invention provides for a liquid coating composition for reinforcing a cellulosic honeycomb structure, comprising a hydraulic binder, a plasticising agent, a stabilising agent, water, optionally an accelerating agent, wherein said liquid coating composition has a final spread diameter of more than 250 mm or 360 mm, preferably of from 250 mm or 360 mm to 500 mm, when measured according to a spread flow test using a hollow cylinder having a diameter of 50mm and a height of 50 mm.

## Description

### TECHNICAL FIELD

The present invention relates to composite building materials, in particular to uniformly cement-coated cellulosic honeycomb structures useful as building materials and a method of producing a uniformly cement-coated cellulosic honeycomb structure.

### BACKGROUND OF THE INVENTION

As the number of construction sites increases in developing parts of the world, the demand for alternative construction materials which could replace the classic brick-and-mortar increases accordingly. While pre-manufactured wood panels can replace indoor walls traditionally made from brick, such wooden panels have the inconvenient of being highly flammable. Because of this, building regulation in most countries requires the flame proofmg of such building materials, which is mostly done by coating or impregnating wooden elements with expensive flame retarding agents, such as for example organohalogen compounds.

A way of reducing the amount of used material in order to reach minimal weight and concurrently minimal material cost is to produce materials having a honeycomb structure. Honeycomb structures have exceptional rigidity in relation to their weight, and they can be manufactured from readily available, renewable sources such as cellulosic material, for example cardboard or paper.

However, to an even greater extent than wooden materials, such cellulosic materials suffer from high flammability.

GB802686 describes method for reducing the flammability of cellulosic honeycomb structures, which consists of immersing the honeycomb structure in an aqueous suspension of cement to thoroughly impregnate and coat the structure. This treatment yields a fireproofed cellulosic honeycomb structure that furthermore exhibits enhanced mechanical strength. However, in order to facilitate thorough coating, the consistency of the aqueous solution of cement is adjusted by the addition of water, which leads to a dilution of the cement suspension. Even though the diluted cement suspension comprises sufficient cement for flame proofing of the honeycomb, this dilution inevitably leads to low amounts of deposited cement on the treated honeycomb structure, which amounts are insufficient for conferring a significant mechanical reinforcement to the honeycomb structure.

In addition, honeycomb structures based on cardboard and paper have another important drawback, which is that they easily absorb ambient humidity or water, for example in the form of rain or infiltration. Once humid or wet, cardboard and paper lose most of their mechanical strength, which naturally is unacceptable for a building material. While it is known to coat cardboard or paper structures with polymer resins or waxes to render them water-proof, such coatings only exacerbate the flammability issues discussed above, while not adding to the mechanical strength of the structure. Therefore, there is a need to provide cardboard and paper-based honeycomb structures that at least retain their strength even when wet but which are not problematic from the flammability standpoint.

WO2012/045653 relates to a method for coating a cellulose honeycomb composite support having a plurality of channels with an aqueous impregnating agent such as aqueous suspensions of cement, in order to increase the fire, water resistance and/or mechanical stability of the resulting composite. WO2012/045653 discloses a method of producing such composite where a cement-based impregnating agent is fed into a vacuum coating chamber and a complete and axially continuous coating is produced in the channels on the inner circumferential surfaces of the channels by deposition of the impregnating agent, and excess impregnating agent is extracted from the vacuum coating chamber. Because the intent is to maximize the amount of deposited cement on the honeycomb composite, impregnation agents with high solid loading are used, but because of the unfavorable rheology of such highly loaded impregnating agents, the use of a vacuum chamber in the process is necessary to force the impregnating agents with negative pressure across the composites to efficiently coat them, which of course significantly complicates the manufacturing process.

A further advantage of cardboard-cement composite building materials is that they exploit ecological raw materials with little impact on the environment.

Consequently, there is a need to provide for novel lightweight building materials having low flammability and excellent mechanical stability, and which can be manufactured in a simpler and more economically favorable process at high coating weights. Furthermore, coating compositions that allow uniform coating are needed.

### SUMMARY OF THE INVENTION

The present invention provides for a liquid coating composition for reinforcing a cellulosic honeycomb structure, comprising a hydraulic binder, a plasticising agent, a stabilising agent, water, optionally an accelerating agent, wherein said liquid coating composition has a final spread diameter of more than 250 mm or 360 mm, preferably of from 250 mm or 360 mm to 500 mm, when measured according to a spread flow test using a hollow cylinder having a diameter of 50mm and a height of 50 mm.

The present invention further provides for a method of producing a reinforced cellulosic honeycomb structure comprising through channels, the method comprising the steps of a. orienting a cellulosic honeycomb structure such that the through channels of the cellulosic honeycomb structure are oriented in a vertical direction, b. directing an essentially vertical flow of liquid coating composition as described herein across the through channels of the cellulosic honeycomb structure such as to form a fresh reinforced cellulosic honeycomb structure, c. curing the fresh reinforced cellulosic honeycomb structure such as to form the reinforced cellulosic honeycomb structure, wherein the liquid coating composition has a fmal spread diameter of more than 250 mm or 360 mm, preferably of from 250 mm or 360 mm to 500 mm, when measured according to a spread flow test using a hollow cylinder having a diameter of 50mm and a height of 50 mm.

The present invention yet further provides for a reinforced cellulosic honeycomb structure obtainable according to the method described herein, for use as a building material.

The present invention also provides for a building material comprising a reinforced cellulosic honeycomb structure obtainable according to the method described herein, in particular a sandwich-structured composite building material comprising a core of reinforced cellulosic honeycomb structure.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

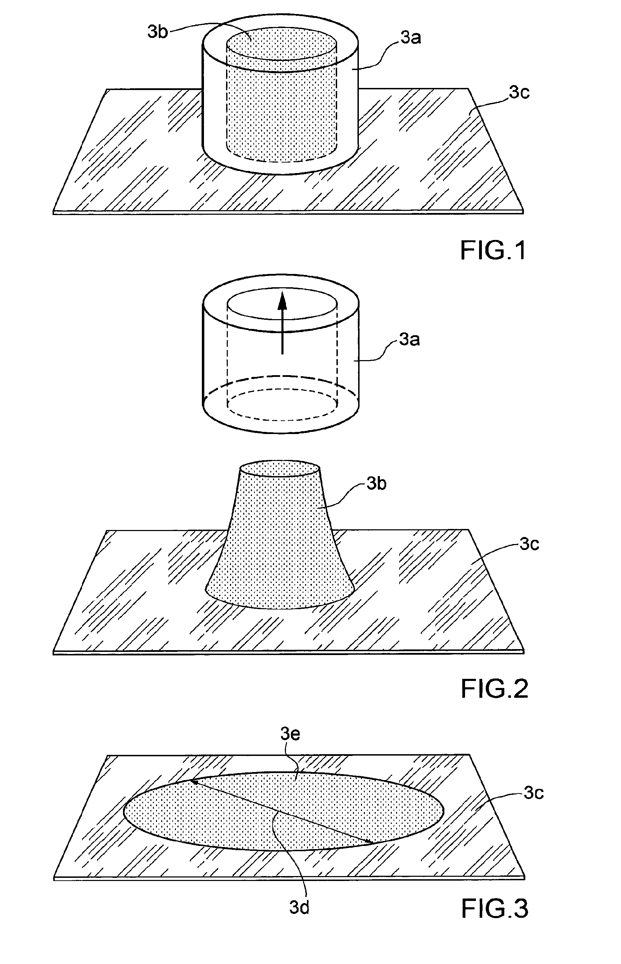

- Fig. 1 to 3: each show schematic representations of the steps of a generic spread flow test using a hollow cylinder (3a) filled with liquid coating composition (3b) on a substrate plate (3c), where the final spread diameter (3d) of the iquid coating composition after it has stopped flowing (3e) can be determined. Figure 1 shows the initial state in which the freshly prepared liquid coating composition is contained in the hollow cylinder. Figure 2 shows the hollow cylinder being lifted up and the liquid coating composition beginning to spread on the substrate plate. Figure 3 shows the liquid coating composition after it has stopped flowing and indicates the final spread diameter.

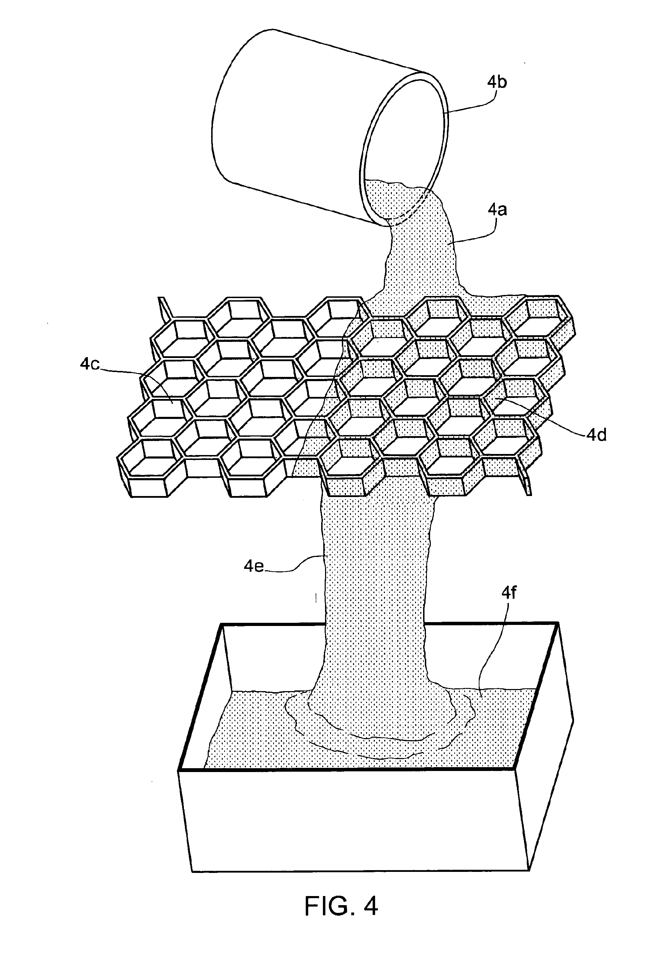

- Fig. 4: shows a method of coating a cellulosic honeycomb (4c) via a flow of liquid coating composition (4a) that is poured from an outlet (4b) on top of the cellulosic honeycomb where gravity forces the liquid composition through the channels of the cellulosic honeycomb, thus forming the uncured reinforced cellulosic honeycomb (4d). Excess liquid coating composition (4e) that is not deposited on the cellulosic honeycomb flows into a collecting recipient (4f)

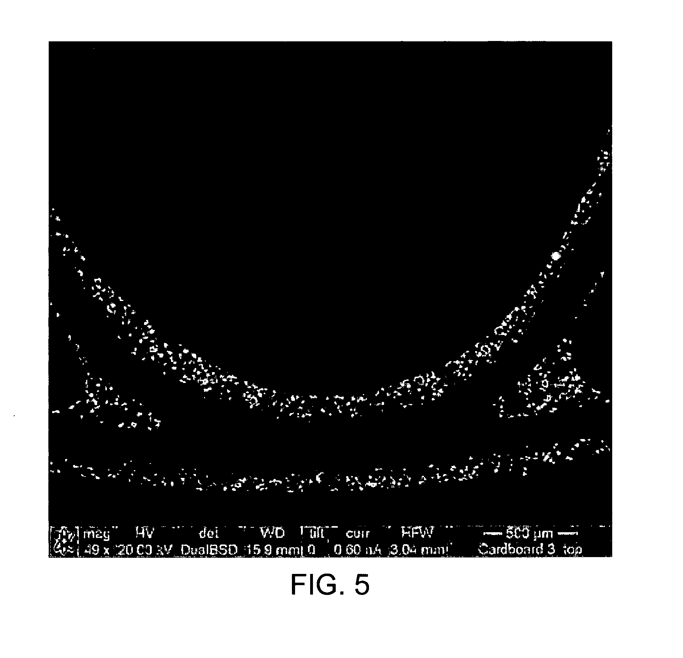

- Fig. 5: shows a magnified picture (49x) of a cured reinforced cellulosic honeycomb structure coated with a liquid coating composition having a final spread diameter of 316 mm. The liquid coating composition is evenly deposited on the cellulosic honeycomb structure.

### DESCRIPTION

The present invention provides for a liquid coating composition for impregnating a cellulosic honeycomb structure, comprising a hydraulic binder, a plasticising agent, a stabilising agent, optionally, an accelerating agent, wherein said liquid coating composition has a final spread diameter of more than 250 mm or 360 mm, preferably of from 250 mm or 360 mm to 500 mm, when measured according to a spread flow test using a hollow cylinder having a diameter of 50mm and a height of 50 mm.

Nowadays, cellulosic honeycomb structures are widely commercially available, and may be formed in a known manufacturing method using either expansion, corrugation or moulding techniques.

The cellulosic honeycomb structures useful in the context of the present invention may be manufactured from superposed sheets of a cellulosic material such as paper or cardboard, which sheets are selectively affixed to each other in a known manner, for example by glueing, such as to form the cellulosic honeycomb structure upon expansion.

The cellulosic honeycomb structures useful in the context of the present invention may comprise of from 10³ to 10⁶, preferably of from 10⁴ to 10⁶, more preferably of from 3•10⁴ to 3•10⁵ through channels per square meter. Preferably, the through channels are essentially oriented in a direction normal to the plane formed by the cellulosic honeycomb structure.

The reinforced cellulosic honeycomb structures useful in the context of the present invention may have a thickness of from 10 mm to 200 mm, preferably of from 10 mm to 150 mm and more preferably of from 25 mm to 100 mm. In the case the through holes are essentially oriented in a direction normal to the plane formed by the cellulosic honeycomb structure, the through hole length corresponds to the thickness of the cellulosic honeycomb structures.

Exemplary cellulosic honeycomb structures may be cardboard honeycomb structures or paper honeycomb structures. Fiber sources for the manufacture of the paper or cardboard cellulosic webs that form the cellulosic honeycomb structure may be natural sources such as wood, linen, jute, sisal, cotton and the like.

The liquid coating composition for reinforcing the cellulosic honeycomb structure comprises a hydraulic binder, a plasticising agent, a stabilising agent, water and optionally an accelerating agent.

The liquid coating composition further has the advantage of rendering the coated cellulosic honeycomb structure resistant to a decrease in mechanical strength when humid or wet, once the liquid coating composition is set and hardened. It also provides non-flammability, increases fire resistance and can enhance the mechanical strength of the coated honeycomb, when applied according to the method described further below, and is comprised in the liquid coating composition in 100 parts by dry weight.

The hydraulic binder may be chosen from any suitable mineral binder, more specifically cementitious binder, such as for example Ordinary Portland Cement (OPC), blast furnace slag cement, or other classes of cement or other cements as described in the literature, e.g. in US 6,008,275. Preferably the hydraulic binder is a cement of enhanced fineness, in particular a cement of enhanced fineness having a Blaine value of 350 m²/kg or more, i.e. 350 m²/kg to 6000m²/kg when measured according to ASTM C204 using Method A. Exemplary commercial cements having an enhanced fineness are high early strength "Normo 5R" (CEM I 52.5R) Portland cement, commercially available from Holcim, as well as microfine Portland cement (MFPC) or ultrafine Portland cement (UFPC) "MasterRoc MP 650", commercially available from BASF.

In a preferred embodiment, the hydraulic binder comprises at least 30 percent by dry weight or preferably from 30 to 99.9 percent by dry weight of a cement, preferably a cement of enhanced fineness such as microfine Portland cement (MFPC) or ultrafme Portland cement (UFPC); and optionally up to 70 percent by dry weight, preferably of from 0.1 to 70 percent by dry weight of a fly ash. Suitable fly ash may be commercially available from Holcim under name of "Hydrolent". In an alternative embodiment, the hydraulic binder may also consist solely of a cement, preferably a cement of enhanced fineness such as microfine Portland cement (MFPC) or ultrafine Portland cement (UFPC).

The liquid coating composition for impregnating a cellulosic honeycomb structure comprises a plasticizing agent, preferably of from 0.2 to 5 parts, more preferably of from 0.2 to 2 parts by dry weight of the plasticising agent.

The plasticizing agent may be chosen from any polymer plasticizing agent such as for example sulphonated naphtalene formaldehyde polycondensates, modified lignosulphonates, sulphonated melamine-formaldehyde polycondensates, or sulphonated melamine-urea-formaldehyde polycondensates; cellulose based, polyvinyl alcohol based, polycarboxylate-based or polycarboxylate-ether-based plasticising agent.

Preferably. the plasticizing agent may consist of polymeric dispersants with a comb-like structure, i.e. a backbone carrying positive or negative ionic groups as well as non-adsorbing side chains that are generally composed by polyethylene oxide units or copolymers thereof such that at least 50% of the total mass of side chains are composed of polyethylene oxide units and grafted on the backbone either by ester, amide, imide or ether bonds. The backbones are mainly composed of acrylic, methacrylic or maleic acid. For example, the most common types of PCEs are made from methoxy or hydroxy poly(ethylene glycol) methacrylate ester (MPEG-MA, HPEG-MA), allyl-methoxy or hydroxy poly(ethylene glycol) (APEG) and maleic anhydride, vinyl ethers (VPEG) copolymerized with maleic anhydride for example, or finally isoprenyl oxy poly(ethylene glycol) (IPEG) copolymerized with acrylic or methacrylic acid for example. Furthermore other functional groups may be incorporated into the backbone. They may be either negatively or positively charged such as phosphonate, diphosphonate, sulfonate, trisilanol or amine functional groups, or neutral such as styrene.

More preferably, the plasticising agent is a polycarboxylate-based or polycarboxylate/ether-based plasticising agent, more preferably a polycarboxylate-based or polycarboxylate/ether-based plasticising agent obtainable from the polymerisation of methacrylic and/or acrylic acid. Most preferably, the plasticising agent is polyacrylate where at least a part of the available carboxylic moieties are esterified with alkoxy-polyethylene oxide or alkoxy-polypropylene oxide.

An equally preferred plasticising agent may be a plasticising agent based on polyoxyethylene mono- or di-phosphonates. Polyoxyethylene mono- or di-phosphonates are linear molecules and made of a functional group (phosphonate) for the adsorption on the surface of the cellulosic substrate and one side chain of polyethylene oxide.

In the case where the plasticizing agent is a polycarboxylate-based or polycarboxylate/ether-based plasticising agent, the liquid coating composition for impregnating a cellulosic honeycomb structure preferably comprises of from 0.2 to 2 parts by dry weight of the plasticising agent.

The liquid coating composition for impregnating a cellulosic honeycomb structure further comprises a stabilizing agent, which stabilizing agent may be comprised of from 0.5 to 10 parts, preferably of from 0.5 to 5 parts by dry weight.

Suitable stabilizing agents may consist of nanoparticles having an average diameter of between 5 microns and 0.001 microns, preferably of between 1 microns and 0.002 microns, more preferably between 0.5 microns and 0.005 microns.

Preferably stabilizing agents are nanoparticles comprising inorganic oxides, hydroxides or carbonates of silicon, calcium, titanium, iron, or combinations thereof, and more preferably the stabilizing agent is silicon dioxide in the form of colloidal or fumed silica.

In the case the stabilizing agent is a colloidal or fumed silica, the average diameter of the nanoparticles is between 150 nm and 3 nm.

Nanoparticles having an average diameter of between 150 nm and 3 nm are particularly preferred since liquid coating compositions including said nanoparticles will yield cellulosic honeycomb structures having enhanced mechanical strength when compared to cellulosic honeycomb structure coated with liquid coating composition including silica having an average diameter above 150 nm. Thus it is possible to achieve additional mechanical strength by the choice of suitable silica without increase in overall density of the reinforced cellulosic honeycomb structures.

The liquid coating composition according to the present invention further comprises water. The weight ratio between water and the dry weight of the hydraulic binder may be of from 0.225 to 0.5, preferably of from 0.225 to 0.4, and more preferably 0.225 to 0.30.

The liquid coating composition for impregnating a cellulosic honeycomb structure may further comprise an optional accelerating agent, which may be any tertiary amine or salt of an alkali or earth alkali metal, and preferably is a salt of calcium or magnesium, and more preferably is a halogen salt of calcium, a calcium sulfate, a calcium nitrate or a calcium carboxylate. Exemplary halogen salts of calcium are calcium chloride or hydrates thereof. It may also be a thiocyanate, for example a sodium thiocyanate.

If present in the liquid coating composition, the accelerating agent can be present of from 0.1 to 5 parts by dry weight.

Because in the coating method according to the present invention, it is necessary that the liquid coating composition for reinforcing a cellulosic honeycomb structure be sufficiently liquid to easily flow across the through holes of the cellulosic honeycomb structure when discharged on top of the cellulosic honeycomb structure, and because it is also necessary that during the flow across the through channels, the liquid coating composition is deposited in sufficient amounts to reinforce the cellulosic honeycomb structure, the rheological properties of the liquid coating composition must be fme-tuned.

The applicants have found that a suspension used for coating a cellulosic honeycomb structure must therefore have a final spread diameter of more than 250 mm, preferably of from 250 mm to 500 mm, more preferably of from 250 mm to 360 mm, when measured according to a spread flow test described in more detail hereinafter.

The spread flow test for determining the suitability of a liquid coating composition for reinforcing a cellulosic honeycomb structure is carried out using a hollow cylinder having an inner diameter of 50 mm and a height of 50 mm.

The spread flow test consists in the steps of a. placing a hollow cylinder having an inner diameter of 50 mm and a height of 50 mm on top of a moist glass plate, b. filling the cylinder to the brim with a liquid coating composition to be tested, c. slowly lifting the cylinder by 50 mm in vertical direction, d. allowing the liquid coating composition to flow and spread on the moist glass plate until it stops flowing, e. measuring the final diameter of the spread (the final spread diameter) of the liquid coating composition in the horizontal plane. Tests that measure the spread flow of a fluid after it has stopped flowing under defined conditions are known in the field as methods for characterizing cement-based materials such as the liquid coating composition used in the present invention, see for example N. Roussel, C. Stefani, R. Leroy, "From mini-cone test to Abrams cone test: measurement of cement-based materials yield stress using slump tests", Cement and Concrete Research, 35, 2005, pp 817-822*.*

In most cases, the liquid coating composition will spread evenly into all directions and form into a shape that is essentially circular and for which the fmal diameter can easily be measured. In the case where the liquid coating composition spreads into another shape, such as for example an ellipse shape, the diameter is taken from the average of at least two measurements, preferably four. These include at least the largest and the smallest diameter and have a roughly constant angle among each other.

In a preferred embodiment, the liquid coating composition for impregnating a cellulosic honeycomb structure comprises 100 parts by dry weight of the hydraulic binder, of from 0.2 to 2 parts by dry weight of the plasticising agent, of from 0.5 to 5 parts by dry weight of the stabilising agent and optionally of from 0.1 to 5 parts by dry weight of the accelerating agent.

Suitable liquid coating compositions that may be used as liquid coating compositions for reinforcing cellulosic honeycomb structures according to the present invention are compositions having a final spread diameter of more than 250 mm, preferably of from 250 mm to 500 mm, more preferably of from 250 mm to 360 mm, when measured according to the spread flow test described above.

The present invention further provides for a method of producing a reinforced cellulosic honeycomb structure comprising through channels, the method comprising the steps of a. orienting a cellulosic honeycomb structure such that the through channels of the cellulosic honeycomb structure are oriented in a vertical direction, b. directing an essentially vertical flow of liquid coating composition as described herein across the through channels of the cellulosic honeycomb structure such as to form a fresh reinforced cellulosic honeycomb structure, c. curing the fresh reinforced cellulosic honeycomb structure such as to form the reinforced cellulosic honeycomb structure, wherein the liquid coating composition has a fmal spread diameter of more than 250 mm, preferably of from 250 mm to 500 mm, more preferably of from 250 mm to 360 mm, when measured according to a spread flow test using a hollow cylinder having a diameter of 50mm and a height of 50 mm.

In the context of the present invention, the term "fresh reinforced cellulosic honeycomb structure" refers to a cellulosic honeycomb structure having the still workable liquid coating composition deposited thereon, and where the binder of the liquid coating composition has not yet had the time to enter the hardening phase.

Optionally, step c. of the method according to the present invention can be carried out by bringing the fresh reinforced cellulosic honeycomb structure to a temperature of from 15 to 200 °C, and preferably to a temperature of 30 to 200 °C.

Preferably, in step b. the essentially vertical flow of liquid coating composition across the through channels of the cellulosic honeycomb structure is driven solely by gravity, i.e. without the need to push the liquid coating composition across the through channels with pressure from above, or to suck it through using underpressure from below.

Because the liquid coating composition has a spread of more than 250 mm according to the spread flow test described above, the rheology of the liquid composition is such that there is no need to push the liquid coating composition across the honeycomb with pressure from above, or to suck it through with underpressure from below to achieve a continuous deposition of liquid coating composition, nor is there a need for lengthy immersion in the liquid coating composition.

Thus reinforced cellulosic honeycomb structure can be produced by directing an essentially vertical flow of liquid coating composition through the cellulosic honeycomb structure, which flow may be created by casting, or pouring, the coating composition on the cellulosic honeycomb structure from above, preferably through a slit die, slide, or chute. Alternatively, good results may also be obtained by dipping the cellulosic honeycomb structure into the liquid coating composition.

The liquid coating composition may settle if left un-agitated for an extended period of time, which is why optionally the liquid coating composition can be vigorously agitated prior to step b. to prevent settling and to provide for a homogeneously dispersed liquid coating composition. The agitation may be carried out by moving the liquid coating composition through a rotating drum, static mixer, or a pump.

The present invention yet further provides for a reinforced cellulosic honeycomb structure for use in a building material, obtainable according to the method described herein, comprising a cellulosic honeycomb structure and a liquid coating composition deposited thereon, said liquid coating composition comprising, and preferably consisting of, 100 parts by dry weight of the hydraulic binder, of from 0.2 to 5 parts by dry weight of the plasticising agent, of from 0.5 to 10 parts by dry weight of the stabilising agent and optionally of from 0.1 to 5 parts by dry weight of the accelerating agent.

The reinforced cellulosic honeycomb structure according to the present invention may have the liquid coating composition deposited thereon in amounts ranging from 190 to 600 g/m², based on the specific surface of the cellulosic honeycomb.

The reinforced cellulosic honeycomb structure according to the present invention may have the liquid coating composition deposited thereon in a thickness of from 0.1 to 0.5 mm.

The reinforced cellulosic honeycomb structures according to the present invention may have an overall density of from 150 to 500 kg/m³, preferably of from 200 kg/m³ to 400 kg/m³.

The present invention yet further provides for a sandwich-structured composite building material comprising a core of reinforced cellulosic honeycomb structure.

### EXPERIMENTS

### Preparation of inventive liquid coating composition

A previously dry-mixed ternary mixture of 500.0 g of ordinary portland cement (Holcim Normo 4), 230.0 g of fly ash (Holcim Hydrolent) and 30.0 g of silica fume (BASF Elkem Microsilica 971-U) having an average diameter of 0.15 micron and a previously wet-mixed binary mixture of 20.0 g of plasticizing agent (BASF Glenium ACE-30) (corresponding to 0.75 parts of plasticizing agent by dry weight) and 205.0 g of water were combined in a running mixer operating at a mixing velocity of 900 rpm in order to form 500 ml of liquid coating composition.

During the first 30 seconds after combining the ternary and binary mixtures, the mixing was manually complemented using a spatula. At the end of these first 30 seconds, the mixing velocity was increased to 2000 rpm for a duration of 120 seconds. Then the mixer was turned off, and the liquid coating composition was allowed to rest for 50 seconds.

### Spread flow test

The needed amount (about 100 mL) of the previously prepared liquid coating composition were immediately used to fill a cylinder standing on a glass plate for the spread flow test as described above. The cylinder was then lifted upwards 10 seconds after it had been filled and the liquid coating composition was allowed to flow and spread on the glass plate.

The final flow spread diameter was then measured 2 minutes after lifting the cylinder, and was of 344 mm.

### Producing a reinforced cellulosic honeycomb structure 1

400 g of the previously prepared liquid coating composition were immediately used for partially coating cardboard honeycomb having a thickness of 70 mm, and having a specific surface of 940 m²/m³.

A cylinder having a height of 25 mm and a diameter of 50 mm was placed on top of the cardboard honeycomb. Then the liquid coating composition was poured into the cylinder and the liquid coating composition was allowed to flow through the below section of the honeycomb structure under the action of gravity. Once the liquid coating composition stopped dripping from the cells, the weight increase of the honeycomb was measured. 44.6 g of the liquid coating composition remains on the honeycomb element, leading to a coated honeycomb structure having a density of 395 kg/m³.

### Producing a reinforced cellulosic honeycomb structure 2

A fresh batch of 1 liter of liquid coating composition was prepared according to the above procedure.

This liquid coating composition was then used for completely coating four 100 x 100 mm cardboard honeycomb samples having a thickness of 70 mm, and having a specific surface of 940 m²/m³.

This liquid coating composition was poured onto the cardboard honeycomb samples and the freshly coated samples were left to cure for 7 days in an atmosphere having 85% relative humidity, before being tested for their compressive strength.

These tests were done with a strain-controlled setup using a loading velocity of 0.2 mm/sec. The compressive strength at the elastic limit was taken as 85% of the peak compressive stress.

The obtained samples reached a mean compressive strength of 1.3 MPa with a standard deviation of 0.3 MPa.

### Comparative liquid coating composition

A liquid coating composition was prepared according to the above procedure, except that the composition contained an amount of only 4.0 g of plasticizing agent (also Glenium ACE-30) and 220.0 g of water for 500 mL of coating material (equivalent to 0.15 parts of plasticizing agent by dry weight). The amounts of the other components were left unchanged.

The thus obtained mixture displayed a spread flow test diameter of 213 mm, a coating weight of 208.5 g and gave reinforced honeycomb with a density of 1588 kg/m³, which is approximately four-fold the density of the reinforced honeycomb obtained with the inventive liquid compositions (395 kg/m³).

In this example the liquid coating composition did not fully flow across the cells of the honeycomb and thus the coating was not evenly distributed in the honeycomb structure.

The obtained sample reached a compressive strength of 2.2 MPa.

### LIST OF REFERENCE SIGNS

- 3a: hollow cylinder
- 3b: liquid coating composition
- 3c: substrate plate
- 3d: fmal spread diameter
- 3e: non-flowing liquid coating composition
- 4a: liquid coating composition
- 4b: outlet for liquid coating composition
- 4c: cellulosic honeycomb structure
- 4d: uncured reinforced cellulosic honeycomb structure
- 4e: excess liquid coating composition
- 4f: collecting recipient

## Claims

1. A liquid coating composition for reinforcing a cellulosic honeycomb structure, comprising
a. a hydraulic binder
b. a plasticising agent
c. a stabilising agent
d. water
e. optionally, an accelerating agent,
wherein the liquid coating composition preferably has a final spread diameter of more than 250 mm according to a spread flow test using a hollow cylinder having an inner diameter of 50mm and a height of 50 mm.

2. The liquid coating composition of claim 1, wherein it comprises
a. 100 parts by dry weight of the hydraulic binder
b. of from 0.2 to 5 parts by dry weight of the plasticising agent
c. of from 0.5 to 10 parts by dry weight of the stabilising agent
d. optionally, 0.1 to 5 parts by dry weight of the accelerating agent.

3. The liquid coating composition of claim 1 or 2, wherein the hydraulic binder comprises at least 30 percent by weight, preferably from 30 to 99.9 percent by weight of cement.

4. The liquid coating composition according to any preceding claim, wherein the weight ratio between water and hydraulic binder is of from 0.225 to 0.30.

5. The liquid coating composition according to any preceding claim, wherein the hydraulic binder comprises at least 0.1 percent by weight, and more preferably of from 0.1 to 70 percent by weight of a fly ash.

6. The liquid coating composition according to any preceding claim, wherein the hydraulic binder is an ordinary Portland cement, preferably a cement of enhanced fmeness having a Blaine value of 350 m²/kg or more.

7. The liquid coating composition according to any preceding claim, wherein the plasticising agent is a polycarboxylate-based or polycarboxylate/ether-based plasticising agent, and wherein the plasticising agent is comprised of from 0.2 to 5 parts by dry weight.

8. The liquid coating composition according to any preceding claim, wherein the stabilising agent is a silica or an alumina, preferably a colloidal silica or fumed silica.

9. The liquid coating composition according to any preceding claim, wherein the stabilising agent is nanoparticles having an average diameter of between 5 microns and 0.001 microns, preferably of between 1 microns and 0.002 microns, more preferably between 0.5 microns and 0.005, and most preferably an average diameter of between 150 nm and 3 nm.

10. The liquid coating composition according to any preceding claim, wherein the accelerating agent is a salt of an earth alkali metal, preferably a calcium salt, and more preferably is CaCl₂.

11. A method of producing a reinforced cellulosic honeycomb structure comprising through channels, the method comprising the steps of
a. orienting a cellulosic honeycomb structure such that the through channels of the cellulosic honeycomb structure are oriented in a vertical direction,
b. directing an essentially vertical flow of liquid coating composition according to claims 1 to 10 across the through channels of the cellulosic honeycomb structure such as to form a fresh reinforced cellulosic honeycomb structure,
c. curing the fresh reinforced cellulosic honeycomb structure such as to form the reinforced cellulosic honeycomb structure,
d. wherein the liquid coating composition has a final spread diameter of more than 250 mm or 360 mm, preferably of from 250 mm or 360 mm to 500 mm, when measured according to a spread flow test using a hollow cylinder having a diameter of 50mm and a height of 50 mm.

12. The method of producing an impregnated cellulosic honeycomb structure according to claim 11, wherein the essentially vertical flow may be created by casting or pouring, the liquid coating composition on the cellulosic honeycomb structure, preferably through a slit die, slide, or chute.

13. A reinforced cellulosic honeycomb structure obtainable according to the method of claims 11 to 12, for use in a building material, comprising a cellulosic honeycomb structure and a liquid coating composition deposited thereon.

14. The reinforced cellulosic honeycomb structure of claim 13, wherein the liquid coating composition comprises, and preferably consists of, 100 parts by dry weight of the hydraulic binder, of from 0.2 to 5 parts by dry weight of the plasticising agent, of from 0.5 to 10 parts by dry weight of the stabilising agent and optionally of from 0.1 to 5 parts by dry weight of the accelerating agent.

15. A sandwich-structured composite building material comprising a core of reinforced cellulosic honeycomb structure according to claims 13 to 14.

16. The reinforced cellulosic honeycomb structure of claim 13 to 14, wherein the liquid coating composition is deposited thereon in a thickness of from 0.1 to 0.5 mm.
